# EUROPEAN PATENT APPLICATION

(11) **EP 4 091 997 A1**
(43) Date of publication of application: **23.11.2022**
(21) Application number: 21767632.9
(22) Date of filing: 12.03.2021
(51) Int. Cl.: C03C 3/087, G11B 5/73, G11B 5/84

(54) **GLASS COMPOSITION, GLASS PLATE AND METHOD FOR PRODUCING SAME, AND INFORMATION RECORDING MEDIUM SUBSTRATE**

(30) Priority: 13.03.2020 JP 2020044331
(71) Applicant: NIPPON SHEET GLASS COMPANY, LIMITED, Tokyo 108-6321 (JP)
(72) Inventor: SAKAGUCHI Koichi, Tokyo 108-6321 (JP); KURACHI Junji, Tokyo 108-6321 (JP)
(74) Representative: Cabinet Beau de Loménie
(86) International application number: PCT/JP2021/010151
(87) International publication number: WO 2021/182621

(57) **Abstract**

The present invention provides a glass composition having a low density and having a specific elastic modulus high enough to reduce deflection. The glass composition includes, as components, in mol%: 60 to 75% SiO₂; 5 to 15% Al₂O₃; 0.5 to 5% MgO; 0.5 to 10% CaO; 5 to 20% Li₂O; 2 to 10% Na₂O; and 0 to 5% K₂O, and has a density of 2.48 g/cm³ or less. The glass composition has a specific elastic modulus of, for example, 33.5 × 10⁶ Nm/kg or more.

## Description

### TECHNICAL FIELD

The present invention relates to a glass composition and particularly relates to a glass composition suitable for a substrate of an information recording medium. The present invention also relates to a glass sheet formed of the glass composition, a method for producing the glass sheet, and even a substrate for an information recording medium, the substrate including the glass sheet.

### BACKGROUND ART

Larger recording capacity and shorter access time have been required of information recording devices such as magnetic disks. One of the means for satisfying the requests is faster rotation of information recording media.

However, a substrate of an information recording medium deflects by rotation. The deflection may increase resonance of the information recording medium with increasing rotational speed and may end up with a collision between the information recording medium and a magnetic head to cause a read error or a magnetic head crash. Because of that, it is impossible to decrease the distance, called the flying height, between a magnetic head and an information recording medium having a conventional substrate to a certain distance or less. This prevents an increase in recording capacity.

Substrates desirably have a high elastic modulus to reduce deflection and resonance of the substrates. Glass is known to basically have a higher Young's modulus than that of an aluminum alloy forming an aluminum substrate, though the Young's modulus of glass depends on the composition thereof. Patent Literatures 1 and 2, for example, disclose glasses developed to be used as substrates of information recording media.

### CITATION LIST

### Patent Literature

Patent Literature 1: JP H10-081542 A
Patent Literature 2: WO 98/055993 A1

### SUMMARY OF INVENTION

### Technical Problem

The glasses disclosed in Patent Literatures 1 and 2 have a high density, and thus need to be improved in view of reducing load on a motor of an information recording device and preventing breakage by dropping. Patent Literatures 1 and 2 discuss increasing the specific elastic modulus of each glass in view of preventing deflection during rotation, the specific elastic modulus being determined by dividing the Young's modulus by the density. Even when the density is high, a Young's modulus high enough to compensate for the high density makes it possible to maintain the specific elastic modulus of a glass at a high level. Thus, the glasses disclosed in Patent Literatures 1 and 2 have a density of about 2.67 g/cm³ or more, which is not sufficiently low.

It is accordingly an object of the present invention to provide a glass composition having a low density and having a specific elastic modulus high enough to reduce deflection caused by rotation of a substrate formed of the glass composition.

### Solution to Problem

As a result of energetic studies of the contents of components in an aluminosilicate glass and the properties thereof, the present inventor has successfully achieved the above object.

The present invention provides a glass composition including, as components, in mol%:
60 to 75% SiO₂;
5 to 15% Al₂O₃;
0.5 to 5% MgO;
0.5 to 10% CaO;
5 to 20% Li₂O;
2 to 10% Na₂O; and
0 to 5% K₂O, wherein
the glass composition has a density of 2.48 g/cm³ or less.

The present invention also provides a glass sheet formed of the glass composition according to the present invention.

The present invention also provides a substrate for an information recording medium, the substrate including the glass sheet according to the present invention.

The present invention also provides a method for producing a glass sheet, including:
melting glass raw materials; and
shaping the molten glass raw materials into a glass sheet by a float process, wherein
the glass raw materials are prepared so that the glass sheet is formed of the glass composition according to the present invention.

### Advantageous Effects of Invention

According to the present invention, a glass composition having a low density and having a high specific elastic modulus can be provided.

### DESCRIPTION OF EMBODIMENTS

Hereinafter, the symbol % used to indicate the contents of components of a glass composition is "mol%" unless otherwise specified. Preferred ranges of the contents of components, the sum totals of the components, ratios determined by given expressions, property values of a glass, etc. can be obtained by combining any of preferred upper and lower limits individually described below. Hereinafter, for simplicity of description, the content of a component in mol% is sometimes expressed as [X]. The X represents a component forming a glass composition. Accordingly, for example, [SiO₂] - [Al₂O₃] means a difference determined by subtracting the content of Al₂O₃ in mol% from the content of SiO₂ in mol%. [R₂O] means the sum of [Li₂O], [Na₂O], and [K₂O] ([R₂O] = [Li₂O] + [Na₂O] + [K₂O]), and [R'O] means the sum of [MgO], [CaO], [SrO], and [BaO] ([R'O] = [MgO] + [CaO] + [SrO] + [BaO]).

Hereinafter, the term "substantially free" of a component is used to mean that the content of the component is limited to less than 0.1 mol%, preferably less than 0.07 mol%, and even more preferably less than 0.05 mol%. Industrially produced glass compositions often contain a small amount of impurities derived from, for example, an industrial raw material. The term "substantially" is used to mean that inevitable impurities are allowed to be contained as long as the upper limit of the content thereof is as described above. Additionally, the following description of embodiments of the present invention is not intended to limit the present invention to specific embodiments.

SiO₂ is a component for forming a network structure of the glass. The content of SiO₂ is preferably 75% or less, 71% or less, 70% or less, or particularly 69.40% or less, and may be, in some cases, 68% or less. The content of SiO₂ is preferably 60% or more, 64% or more, 65% or more, or particularly 66.41% or more, and may be, in some cases, 67% or more.

Al₂O₃ is a component that improves the Young's modulus of the glass and that suppresses devitrification when used in an adequate amount. Too high a content of Al₂O₃ increases the viscosity and devitrification temperature of the glass and decreases the meltability thereof. The content of Al₂O₃ is preferably 15% or less, 11.3% or less, 10% or less, or particularly 9.98% or less. The content of Al₂O₃ is preferably 5% or more, 7.9% or more, 8% or more, or particularly 8.44% or more, and may be, in some cases, 9% or more.

[SiO₂] - [Al₂O₃] is a parameter affecting the density and the specific elastic modulus. When this difference is great, the density tends to be small; when this difference is small, the specific elastic modulus tends to be great. From this perspective, [SiO₂] - [Al₂O₃] is preferably 54.0% or more, 56.0% or more, or particularly 56.4% or more, and may be, in some cases, 58% or more. [SiO₂] - [Al₂O₃] is preferably 65% or less, 62% or less, or particularly 61.0% or less, and may be, in some cases, 60% or less.

MgO is a component that improves the Young's modulus of the glass, that decreases the density thereof, and that improves the meltability thereof. However, too high a MgO content increases the devitrification temperature of the glass. The content of MgO is preferably 0.5% or more, 1.1% or more, 1.5% or more, or particularly 1.60% or more, and may be, in some cases, 1.7% or more, or even 1.8% or more. The content of MgO is preferably 5% or less, 2.8% or less, 2.5% or less, or particularly 2.12% or less, and may be, in some cases, 2% or less, or even 1.9% or less.

CaO is a component that decreases the viscosity of the glass at high temperatures and that improves the meltability thereof. However, too high a content of CaO is likely to cause devitrification of the glass. The content of CaO is preferably 0.5% or more, 1.8% or more, 2% or more, or particularly 2.32% or more, and may be, in some cases, 3% or more, or even 4.4% or more. The content of CaO is preferably 10% or less, 7.4% or less, 7% or less, or particularly 6.37% or less, and may be, in some cases, 6% or less, or even 5% or less.

To improve the meltability of the glass, ([CaO] + [MgO]) is preferably 2% or more, 3.5% or more, or particularly 3.92% or more, and may be, in some cases, 4.5% or more, or even 5% or more. To decrease the devitrification property, ([CaO] + [MgO]) is preferably 10% or less, 9% or less, or particularly 8.49% or less, and may be, in some cases, 8% or less. ([CaO] + [MgO]) in [R'O] may also be within the above range.

To obtain a satisfactory devitrification resistance, [CaO]/([CaO] + [MgO]) is preferably 0.58 or more, 0.59 or more, or particularly 0.592 or more, and may be, in some cases, 0.65 or more. [CaO]/([CaO] + [MgO]) is preferably 0.76 or less, or particularly 0.750 or less, and may be, in some cases, 0.7 or less.

Li₂O is a component that increases the meltability of the glass and that is suitable for maintaining the Young's modulus among the glass network-modifying components. However, too high a content of Li₂O decreases the Young's modulus of the glass and excessively decreases the viscosity, leading to a less satisfactory devitrification resistance. The content of Li₂O is preferably 5% or more, 7.0% or more, 7.5% or more, 7.6% or more, 7.7% or more, 7.8% or more, or particularly 7.89% or more, and may be, in some cases, 9% or more, or even 10% or more. The content of Li₂O is preferably 20% or less, 15% or less, 14.3% or less, 14% or less, 13.5% or less, or particularly 13.42% or less, and may be, in some cases, 13% or less, or even 12% or less.

Na₂O is a component that increases the meltability of the glass and that suppresses devitrification thereof. However, too high a content of Na₂O decreases the Young's modulus and excessively decreases the viscosity. The content of Na₂O is preferably 2% or more, 3.5% or more, 3.7% or more, or particularly 3.79% or more, and may be, in some cases, 3.9% or more, or even 5% or more. The content of Na₂O is preferably 10% or less, 9% or less, 8.5% or less, 8.2% or less, or particularly 7.67% or less, and may be, in some cases, 7% or less.

K₂O is an optional component that increases the meltability of the glass and suppresses devitrification thereof when added in a small amount. However, too high a content of K₂O decreases the Young's modulus and excessively decreases the viscosity. The content of K₂O may be 0.05% or more, particularly 0.1% or more, or, in some cases, 0.15% or more. The content of K₂O is preferably 5% or less, 2% or less, less than 1%, and may be, in some cases, less than 0.25%.

[R₂O] is desirably adjusted to 12 to 20% to keep favorable meltability and a satisfactory devitrification resistance of the glass and not to decrease the formability as a result of excessive decrease in viscosity. [R₂O] is preferably 13% or more, 13.5% or more, or particularly 13.75% or more, and may be, in some cases, 14% or more, or 15% or more. [R₂O] is preferably 20% or less, 19.5% or less, or particularly 19.35% or less, and may be, in some cases, 19% or less, 18.5% or less, or even 18% or less.

Moreover, when [Li₂O] > [Na₂O] is satisfied, the density tends to be low and/or the Young's modulus tends to be high, compared to the case where [Li₂O] > [Na₂O] is not satisfied. Furthermore, [Na₂O]/([Na₂O] + [Li₂O]) is preferably 0.2 or more or particularly 0.25 or more to maintain a satisfactory devitrification resistance, and may be, in some cases, 0.29 or more, or even 0.33 or more. [Na₂O]/([Na₂O] + [Li₂O]) is preferably 0.49 or less or particularly 0.48 or less to have a desirable density and a desirable Young's modulus, and may be, in some cases, 0.46 or less, 0.45 or less, 0.43 or less, 0.41 or less, less than 0.4, or even 0.37 or less. However, when [Na₂O]/([Na₂O] + [Li₂O]) is less than 0.4, [Na₂O] is preferably 3.5% or more to maintain a satisfactory devitrification resistance.

[R₂O]/([R₂O] + [CaO] + [MgO]) is preferably 0.55 or more, 0.61 or more, or particularly 0.634 or more to obtain a satisfactory devitrification resistance, and may be, in some cases, 0.7 or more. [R₂O]/([R₂O] + [CaO] + [MgO]) is preferably 0.90 or less, 0.84 or less, or particularly 0.831 or less.

([R₂O] + [CaO] + [MgO])/([R₂O] + [CaO] + [MgO] + [Al₂O₃]) is preferably 0.65 or more, 0.68 or more, or particularly 0.702 or more so as not to result in an excessively low shaping temperature relative to the absolute value of the viscosity and the devitrification temperature. [R₂O]/([R₂O] + [CaO] + [MgO]) is preferably 0.75 or less, 0.73 or less, or particularly 0.724 or less. When this ratio is within the preferable range, the density tends to be small and/or the Young's modulus tends to be high.

TiO₂ is an optional component that increases the Young's modulus of the glass. However, because TiO₂ increases the density and also affects the devitrification property, the content of TiO₂ is preferably 0.2% or less. ZrO₂ is a similar optional component, and the content thereof is preferably 0.2% or less. [TiO₂] + [ZrO₂] which corresponds to the sum of the contents of TiO₂ and ZrO₂ is also preferably 0.2% or less. More preferably, the glass composition is substantially free of TiO₂ and ZrO. Meanwhile, because of the decreasing effect of TiO₂ and/or ZrO₂ on a devitrification temperature TL, [TiO₂] + [ZrO₂] may be 0.005% or more.

SnO₂ and CeO₂ are optional components that can exert the refining effect as valences of Sn or Ce change. However, too high contents of SnO₂ and CeO₂ increase the density of the glass and, in some cases, lead to a less satisfactory devitrification resistance. The contents of SnO₂ and CeO₂ are each preferably 0.2% or less, and, more preferably, the glass composition is substantially free of SnO₂ and CeO₂. Even more preferably, the sum of the contents of SnO₂ and CeO₂ is limited to such a small value that the glass composition can be considered to be substantially free of SnO₂ and CeO₂. For example, the sum of the contents of SnO₂ and CeO₂ ([SnO₂] + [CeO₂]) is limited to less than 0.07%.

SrO and BaO, which are also optional components, increase the density of the glass and, in some cases, decrease the Young's modulus of the glass. The contents of SrO and BaO are each preferably 0.2% or less. [SrO] + [BaO] which corresponds to the sum of the contents of SrO and BaO is more preferably 0.2% or less. Even more preferably, the glass composition is substantially free of SrO and BaO.

Nb₂O₅, a lanthanide oxide, Y₂O₃, and Ta₂O₅ are optional components that have an effect on improving the Young's modulus of the glass. However, these optional components sometimes increase the density of the glass and lead to a less satisfactory devitrification resistance. It is preferred that the glass composition be substantially free of Nb₂O₅, the lanthanide oxide, Y₂O₃, and Ta₂O₅. The lanthanide oxide is an oxide of any of the elements having atomic numbers from 57 to 71.

P₂O₅, B₂O₃, and F are optional components that accelerates melting of the raw materials. However, these components facilitate erosion of a refractory material of a melting furnace, and condensate on the furnace wall after volatilization and then sometimes enter a glass melt as foreign matters. It is preferred that the glass composition be substantially free of P₂O₅, B₂O₃, and F.

It is known that addition of a sulfuric acid salt as a part of a raw material promotes refining. When a sulfuric acid salt is added, SO₃ generated from the sulfuric acid salt is often left in the glass. The content of SO₃ is preferably 0.5% or less, 0.3% or less, or even 0.2% or less. SO₃ is an optional component and the glass composition may be substantially free of SO₃.

Examples of other optional components that can exert the refining effect include As₂O₅, Sb₂O₅, and Cl. However, these components have a major effect on the environment (the same can be said for F on this point). It is preferred that the glass composition be substantially free of As₂O₅, Sb₂O₅, and Cl.

A typical impurity inevitably introduced from an industrial raw material of glass is iron oxide. Iron oxide is present in the glass composition as a divalent oxide (FeO) or a trivalent oxide (Fe₂O₃). The content [T-Fe₂O₃] of iron oxide calculated in terms of the trivalent oxide is preferably 0.5% or less, 0.3% or less, or particularly 0.2% or less. When coloring of the glass should be avoided, it is preferred that the glass composition be substantially free of iron oxide (T-Fe₂O₃) calculated in terms of Fe₂O₃.

The glass composition according to the present invention can contain an optional component other than the above, but it is preferred that the glass composition be substantially free of an optional component other than the above.

In a preferred embodiment A, the glass composition according to the present invention includes the following components.
[SiO₂]: 64 to 71%
[Al₂O₃]: 7.9 to 11.3%
[MgO]: 1.1 to 2.8%
[CaO]: 1.8 to 7.4%
[Li₂O]: 7.0 to 14.3%
[Na₂O]: 3.5 to 8.2%
[K₂O]: 0 to 2%

In the embodiment A, the glass composition preferably satisfies the following requirements A1) to A4).
A1) [MgO] + [CaO] ≥ 3%
A2) [R₂O]:15 to 19%
A3) [Li₂O] > [Na₂O]
A4) [Al₂O₃] ≤ 10%

In the embodiment A, the glass composition preferably satisfies the following requirements A5) to A8).
A5) [SiO₂] - [Al₂O₃] is 56.0% or more.
A6) ([R₂O] + [MgO] + [CaO])/([R₂O] + [MgO] + [CaO] + [Al₂O₃]) is 0.68 to 0.73.
A7) ([Na₂O]/([Na₂O] + [Li₂O]) is 0.2 to 0.49.
A8) The specific elastic modulus is 33.5 × 10⁶ Nm/kg or more.

In a preferred embodiment B, the glass composition according to the present invention preferably satisfies the following requirement B1).
B1) [Na₂O]/([Na₂O] + [Li₂O]) ≤ 0.45

The requirement B1) may be [Na₂O]/([Na₂O] + [Li₂O]) ≤ 0.43. In the glass composition of the embodiment B, the contents of the components, from [SiO₂] to [K₂O], may be within the ranges in the embodiment A.

The glass composition according to the present embodiment can have a low density and a high specific elastic modulus. When acceleration such as an impact is applied to a glass sheet formed of a glass composition having a low density, an amplitude of oscillation is relatively small. The small amplitude can reduce breakage, which can be caused by growth of a microcrack, of the glass sheet. This advantageous effect can be obtained by focusing on, separately from the specific elastic modulus, the density itself and controlling the density low. A glass sheet formed of the glass composition according to the present embodiment is suitable for preventing deflection during rotation because of its high specific elastic modulus, and also has an improved impact resistance because of its low density.

In a preferred embodiment, the properties that the glass composition according to the present invention can have, specifically the elastic modulus, density, and temperature properties, are as follows.

The Young's modulus is preferably 80 GPa or more, 82 GPa or more, or even 83 GPa or more. The density is preferably 2.48 g/cm³ or less, 2.46 g/cm³ or less, or even 2.45 g/cm³ or less. The specific elastic modulus is preferably 33.5 × 10⁶ Nm/kg or more, 33.7 × 10⁶ Nm/kg or more, 33.8 × 10⁶ Nm/kg or more, or even 33.9 × 10⁶ Nm/kg or more. The specific elastic modulus is a value calculated by dividing the Young's modulus by the density. Such a high specific elastic modulus as described above is advantageous in terms of preventing deflection of a rotating substrate.

From the viewpoint of the density and the specific elastic modulus, in a preferred embodiment, the glass composition according to the present invention can have the following properties: a density of 2.48 g/cm³ or less and a specific elastic modulus of 33.5 × 10⁶ Nm/kg or more; even a density of 2.46 g/cm³ or less and a specific elastic modulus of 33.7 × 10⁶ Nm/kg or more; and particularly a density of 2.45 g/cm³ or less and a specific elastic modulus of 33.7 × 10⁶ Nm/kg or more.

The devitrification temperature TL is preferably 1150°C or lower or even 1100°C or lower. A shaping temperature T4 is preferably 1020°C or higher or even 1030°C or higher. A difference ΔT (ΔT = T4 - TL) determined by subtracting the devitrification temperature TL from the shaping temperature T4 is preferably greater than 0, more preferably 5°C or greater, even more preferably 10°C or greater, much more preferably 15°C or greater, and particularly preferably 18°C or greater, and may be 25°C or greater. Here, the shaping temperature T4 is a temperature at which the viscosity measured by a platinum ball-drawing method is 10⁴ dPa•s. The devitrification temperature TL is the highest temperature at which devitrification was observed in glass taken out of a temperature-gradient electric furnace, the glass being obtained by holding a crushed glass specimen in the furnace for 2 hours. In a preferred embodiment, the glass composition according to the present invention can have a low devitrification temperature as described above and a positive difference ΔT.

The glass composition according to the present embodiment may have a glass-transition point Tg of 460 to 560°C or even 480 to 550°C.

A preferred linear thermal expansion coefficient is 80 to 88 × 10⁻⁷/°C. Here, the linear thermal expansion coefficient refers to the average linear thermal expansion coefficient in the temperature range of 50 to 350°C. This linear thermal expansion coefficient value is lower than that of common soda-lime glass used, for example, for windows of buildings and vehicles. A lower linear thermal expansion coefficient is advantageous in terms of reducing residual strain, and can reduce warping of a glass sheet and improve cutting stability, for example, when the glass sheet is produced by a float process.

In a preferred embodiment, the glass composition according to the present invention is suitable for mass production by a float process. By the float process, a glass sheet called float glass is produced from the glass composition according to the present invention. As is well known, the float process includes: melting glass raw materials in a melting furnace; and introducing the molten glass raw materials into a float bath to shape the molten glass raw materials into a glass sheet on molten tin in the float bath. In one embodiment of the present invention, float glass is produced by preparing glass raw materials so that a glass composition forming the resulting glass sheet will have the above desirable composition. The float glass is shaped with one principal surface in contact with molten tin in a float bath, and the tin spreads over the principal surface. Accordingly, one principal surface, called a bottom surface, of the float glass has a surface layer formed of tin spread thereon. The other principal surface, called a top surface, does not have such a surface layer. From another perspective, in the float glass, the concentration of tin on one principal surface is higher than that on the other principal surface.

The glass sheet may be a chemically strengthened glass sheet. As is well known, chemical strengthening is a treatment in which compressive stress is introduced in a surface of glass by substituting alkali ions contained in glass with other alkali ions having a larger ionic radius, for example, by substituting lithium ions with sodium ions or sodium ions with potassium ions. Chemical strengthening of the glass sheet is commonly performed by bringing the glass sheet into contact with a molten salt including alkali ions. The molten salt is, for example, potassium nitrate or a salt mixture of potassium nitrate and sodium nitrate. When the molten salt used includes potassium nitrate alone, it is appropriate that the molten salt be at a temperature of about 460°C to 500°C in view of thermal decomposition of potassium nitrate and the thermal resistance of the glass. It is appropriate that the time during which the glass and the molten salt are in contact with each other be, for example, 4 hours to 12 hours.

The chemically strengthened glass sheet is particularly suitable for a substrate for an information recording medium. The glass sheet according to the present invention can also be used in other applications such as cover glasses of displays and solar cells.

### EXAMPLES

Hereinafter, the present invention will be described in more detail using specific examples. The examples given below are not intended to limit the present invention, either.

Batches were prepared to give compositions shown in Tables 1 to 3 using silica, alumina, lithium carbonate, sodium carbonate, magnesium oxide, calcium carbonate, potassium carbonate, etc. which are common glass raw materials. Each of the prepared batches was put in a platinum crucible, held at 1580°C for 4 hours, and then poured onto an iron plate. This glass was held in an electric furnace at 650°C for 30 minutes, after which the furnace was turned off to cool the glass to room temperature. A glass specimen was thus obtained. Properties of thus-obtained glass specimens were measured by the following methods. Tables 1 to 3 show the results. It should be noted that Table 2 show Examples 13 to 16 whose compositions differ from each other in stages between Examples 4 and 8 and Examples 17 to 20 whose compositions differ from each other in stages between Examples 1 and 6.

### [Density ρ and Young's modulus E]

Plate-shaped samples having dimensions of 25 × 25 × 5 mm were fabricated by cutting the glass specimens and mirror-polishing every surface thereof. The density ρ of each sample was measured by Archimedes' principle. The Young's modulus of each sample was measured according to the ultrasonic pulse method in JIS R 1602-1995. Specifically, each sample used in the above density measurement was used to measure, for longitudinal and transverse waves, the sound speed at which an ultrasonic pulse propagates. The sound speeds and the above density were substituted in the formula defined in JIS R 1602-1995 to calculate the Young's modulus E. The propagation speeds were evaluated using an ultrasonic thickness gage MODEL 25DL PLUS manufactured by Olympus Corporation by dividing the time required by a 20 kHz ultrasonic pulse to propagate in the thickness direction of the sample, be reflected, and then come back by the propagation distance (twice the thickness of the sample).

### [Glass-transition point Tg and linear thermal expansion coefficient CTE]

A cylindrical specimen having a diameter of 5 mm and a length of 18 mm was fabricated from each glass specimen. The cylindrical specimen was heated at 5°C/minute using a TMA apparatus to measure a thermal expansion curve. From this curve, the glass-transition point Tg and the average linear thermal expansion coefficient CTE in the temperature range of 50 to 350°C were obtained.

### [Measurement of devitrification temperature TL]

Each glass specimen was crushed into particles, which were sieved to obtain particles that pass through a sieve having an opening size of 2.83 mm and are left on a sieve having an opening size of 1.00 mm. These particles were washed to remove fine powder thereon, followed by drying to prepare a sample for devitrification temperature measurement. An amount of 25 g of the sample for devitrification temperature measurement was put in a platinum boat (a lidless rectangular platinum container) to have an approximately uniform thickness, held in a temperature-gradient furnace for 2 hours, and then taken out of the furnace. The highest temperature at which devitrification was observed in the glass was employed as the devitrification temperature TL of the sample.

### [Measurement of shaping temperature T4]

The viscosity was measured by a platinum ball-drawing method, and a temperature at which the thus-measured viscosity was 10⁴ dPa•s was employed as the shaping temperature T4.

In each of Examples 1 to 31, the Young's modulus is 80 GPa or more, the density is 2.48 g/cm³ or less, and the specific elastic modulus is 33.5 × 10⁶ Nm/kg or more. On the other hand, the specific elastic modulus is as low as 33.1 × 10⁶ Nm/kg in Example 32, and the density is beyond 2.48 g/cm³ in each of Examples 33 to 35. In Tables 1 to 3, the content of the component X is expressed not as [X] but simply as X, and every content is in mol%.

**[Table 1]**

| | Ex. 1 | Ex. 2 | Ex. 3 | Ex. 4 | Ex. 5 | Ex.6 | Ex.7 | Ex.8 | Ex. 9 | Ex. 10 | Ex.11 | Ex.12 |
|---|---|---|---|---|---|---|---|---|---|---|---|---|
| SiO₂ | 67.52 | 67.52 | 67.52 | 67.52 | 67.52 | 67.52 | 67.52 | 67.52 | 67.92 | 68.32 | 68.72 | 69.12 |
| Al₂O₃ | 9.21 | 9.21 | 9.21 | 9.21 | 9.21 | 9.21 | 9.21 | 9.21 | 9.21 | 9.21 | 9.21 | 9.21 |
| MgO | 1.98 | 1.98 | 1.98 | 1.98 | 1.98 | 1.60 | 1.60 | 1.60 | 1.98 | 1.98 | 1.98 | 2.0 |
| CaO | 5.94 | 5.94 | 5.94 | 5.94 | 5.94 | 2.32 | 2.32 | 2.32 | 5.94 | 5.94 | 5.94 | 5.94 |
| Li₂O | 7.89 | 9.10 | 9.86 | 10.62 | 11.38 | 11.50 | 12.46 | 13.42 | 9.10 | 9.10 | 9.10 | 9.10 |
| Na₂O | 7.27 | 6.07 | 5.31 | 4.55 | 3.79 | 7.67 | 6.71 | 5.75 | 5.67 | 5.27 | 4.87 | 4.47 |
| K₂O | 0.18 | 0.18 | 0.18 | 0.18 | 0.18 | 0.18 | 0.18 | 0.18 | 0.18 | 0.18 | 0.18 | 0.18 |
| TiO₂ | 0.00 | 0.00 | 0.00 | 0.00 | 0.00 | 0.00 | 0.00 | 0.00 | 0.00 | 0.00 | 0.00 | 0.00 |
| Fe₂O₃ | 0.00 | 0.00 | 0.00 | 0.00 | 0.00 | 0.00 | 0.00 | 0.00 | 0.00 | 0.00 | 0.00 | 0.00 |
| Total | 100.00 | 100.00 | 100.00 | 100.00 | 100.00 | 100.00 | 100.00 | 100.00 | 100.00 | 100.00 | 100.00 | 100.00 |
| Tg (°C) | 527 | 526 | 523 | 521 | 521 | 489 | 491 | 491 | 527 | 531 | 537 | 540 |
| CTE (10⁻⁷/°C) | 80 | 78 | 77 | 75 | 74 | 86 | 85 | 83 | 75 | 73 | 73 | 71 |
| ρ (g/cm³) | 2.466 | 2.462 | 2.460 | 2.457 | 2.455 | 2.435 | 2.432 | 2.429 | 2.459 | 2.456 | 2.453 | 2.449 |
| E (GPa) | 82.8 | 83.7 | 84.1 | 84.7 | 85.2 | 82.3 | 83.0 | 83.4 | 83.8 | 84.0 | 84.0 | 84.0 |
| E/ρ (10⁶ N•m/kg) | 33.6 | 34.0 | 34.2 | 34.5 | 34.7 | 33.8 | 34.1 | 34.3 | 34.1 | 34.2 | 34.2 | 34.3 |
| T4 (°C) | | | | | | | 1025 | | | | | |
| TL (°C) | 1015 | 1009 | 1120 | 1068 | 1101 | 959 | 994 | 1040 | 1018 | 1038 | 1062 | 1083 |
| Al₂O₃/(Al₂O₃ + SiO₂) | 0.120 | 0.120 | 0.120 | 0.120 | 0.120 | 0.120 | 0.120 | 0.120 | 0.119 | 0.119 | 0.118 | 0.118 |
| (R₂O + MgO + CaO)/ (R₂O + MgO + CaO + Al₂O₃) | 0.716 | 0.716 | 0.716 | 0.716 | 0.716 | 0.716 | 0.716 | 0.716 | 0.713 | 0.709 | 0.705 | 0.702 |
| R₂O/(R₂O + MgO + CaO) | 0.660 | 0.660 | 0.660 | 0.660 | 0.660 | 0.831 | 0.831 | 0.831 | 0.654 | 0.647 | 0.641 | 0.634 |
| CaO/(CaO + MgO) | 0.750 | 0.750 | 0.750 | 0.750 | 0.750 | 0.592 | 0.592 | 0.592 | 0.750 | 0.750 | 0.750 | 0.750 |
| Na₂O/(Na₂O + Li₂O) | 0.480 | 0.400 | 0.350 | 0.300 | 0.250 | 0.400 | 0.350 | 0.300 | 0.384 | 0.367 | 0.348 | 0.329 |
| SiO₂ - Al₂O₃ | 58.3 | 58.3 | 58.3 | 58.3 | 58.3 | 58.3 | 58.3 | 58.3 | 58.7 | 59.1 | 59.5 | 59.9 |

| | | | | | | | | | | | | |
|---|---|---|---|---|---|---|---|---|---|---|---|---|
| Blanks indicate not measured". | | | | | | | | | | | | |

**[Table 2]**

| | Ex.4 | Ex. 13 | Ex.14 | Ex.15 | Ex. 16 | Ex. 8 | Ex.1 | Ex. 17 | Ex. 18 | Ex. 19 | Ex. 20 | Ex. 6 |
|---|---|---|---|---|---|---|---|---|---|---|---|---|
| SiO₂ | 67.52 | 67.52 | 67.52 | 67.52 | 67.52 | 67.52 | 67.52 | 67.52 | 67.52 | 67.52 | 67.52 | 67.52 |
| Al₂O₃ | 9.21 | 9.21 | 9.21 | 9.21 | 9.21 | 9.21 | 9.21 | 9.21 | 9.21 | 9.21 | 9.21 | 9.21 |
| MgO | 1.98 | 1.90 | 1.83 | 1.75 | 1.68 | 1.60 | 1.98 | 1.90 | 1.83 | 1.75 | 1.68 | 1.60 |
| CaO | 5.94 | 5.22 | 4.49 | 3.77 | 3.05 | 2.32 | 5.94 | 5.22 | 4.49 | 3.77 | 3.05 | 2.32 |
| Li₂O | 10.62 | 11.18 | 11.74 | 12.30 | 12.86 | 13.42 | 7.89 | 8.61 | 9.34 | 10.06 | 10.78 | 11.50 |
| Na₂O | 4.55 | 4.79 | 5.03 | 5.27 | 5.51 | 5.75 | 7.27 | 7.35 | 7.43 | 7.51 | 7.59 | 7.67 |
| K₂O | 0.18 | 0.18 | 0.18 | 0.18 | 0.18 | 0.18 | 0.18 | 0.18 | 0.18 | 0.18 | 0.18 | 0.18 |
| TiO₂ | 0.00 | 0.00 | 0.00 | 0.00 | 0.00 | 0.00 | 0.00 | 0.00 | 0.00 | 0.00 | 0.00 | 0.00 |
| Fe₂O₃ | 0.00 | 0.00 | 0.00 | 0.00 | 0.00 | 0.00 | 0.00 | 0.00 | 0.00 | 0.00 | 0.00 | 0.00 |
| Total | 100.00 | 100.00 | 100.00 | 100.00 | 100.00 | 100.00 | 100.00 | 100.00 | 100.00 | 100.00 | 100.00 | 100.00 |
| Tg (°C) | 521 | 522 | 514 | 509 | 506 | 491 | 527 | 529 | 512 | 507 | 502 | 489 |
| CTE (10⁻⁷/°C) | 75 | 76 | 78 | 79 | 80 | 83 | 80 | 80 | 81 | 82 | 84 | 86 |
| ρ (g/cm³) | 2.457 | 2.451 | 2.446 | 2.440 | 2.434 | 2.429 | 2.466 | 2.459 | 2.453 | 2.447 | 2.440 | 2.435 |
| E (GPa) | 84.7 | 84.6 | 84.3 | 84.0 | 83.7 | 83.4 | 82.8 | 82.9 | 82.7 | 82.6 | 82.4 | 82.3 |
| E/ρ (10⁶ N•m/kg) | 34.5 | 34.5 | 34.5 | 34.4 | 34.4 | 34.3 | 33.6 | 33.7 | 33.7 | 33.8 | 33.8 | 33.8 |
| TL (°C) | 1068 | 1070 | 1060 | 1047 | 1049 | 1040 | 1015 | 989 | 958 | 946 | 948 | 959 |
| Al₂O₃/(Al₂O₃ + SiO₂) | 0.120 | 0.120 | 0.120 | 0.120 | 0.120 | 0.120 | 0.120 | 0.120 | 0.120 | 0.120 | 0.120 | 0.120 |
| (R₂O + MgO + CaO)/ (R₂O + MgO + CaO + Al₂O₃) | 0.716 | 0.716 | 0.716 | 0.716 | 0.716 | 0.716 | 0.716 | 0.716 | 0.716 | 0.716 | 0.716 | 0.716 |
| R₂O/(R₂O + MgO + CaO) | 0.660 | 0.694 | 0.728 | 0.763 | 0.797 | 0.831 | 0.660 | 0.694 | 0.728 | 0.763 | 0.797 | 0.831 |
| CaO/(CaO + MgO) | 0.750 | 0.733 | 0.711 | 0.683 | 0.645 | 0.592 | 0.750 | 0.733 | 0.711 | 0.683 | 0.645 | 0.592 |
| Na₂O/(Na₂O + Li₂O) | 0.300 | 0.300 | 0.300 | 0.300 | 0.300 | 0.300 | 0.480 | 0.460 | 0.443 | 0.427 | 0.413 | 0.400 |
| SiO₂ - Al₂O₃ | 58.3 | 58.3 | 58.3 | 58.3 | 58.3 | 58.3 | 58.3 | 58.3 | 58.3 | 58.3 | 58.3 | 58.3 |

**[Table 3]**

| | Ex. 21 | Ex. 22 | Ex. 23 | Ex. 24 | Ex. 25 | Ex. 26 | Ex. 27 | Ex. 28 | Ex. 29 | Ex. 30 | Ex. 31 | Ex. 32 | Ex. 33 | Ex. 34 | Ex. 35 |
|---|---|---|---|---|---|---|---|---|---|---|---|---|---|---|---|
| SiO₂ | 67.92 | 68.32 | 68.72 | 69.12 | 69.40 | 67.90 | 66.41 | 67.60 | 67.62 | 67.64 | 67.66 | 67.52 | 65.52 | 63.52 | 64.91 |
| Al₂O₃ | 9.21 | 9.21 | 9.21 | 9.21 | 8.44 | 9.21 | 9.98 | 9.21 | 9.21 | 9.21 | 9.21 | 9.21 | 10.21 | 11.21 | 10.75 |
| MgO | 1.60 | 1.60 | 1.60 | 1.60 | 1.84 | 1.98 | 2.12 | 1.70 | 1.71 | 1.73 | 1.75 | 1.60 | 2.17 | 2.36 | 2.27 |
| CaO | 2.32 | 2.32 | 2.32 | 2.32 | 5.51 | 5.94 | 6.37 | 3.23 | 3.41 | 3.59 | 3.77 | 2.32 | 6.50 | 7.07 | 6.81 |
| Li₂O | 11.98 | 11.98 | 11.98 | 11.98 | 9.29 | 9.10 | 8.91 | 11.62 | 11.45 | 11.28 | 11.11 | 7.89 | 8.02 | 8.15 | 8.72 |
| Na₂O | 6.79 | 6.39 | 5.99 | 5.59 | 5.33 | 5.67 | 6.00 | 6.45 | 6.40 | 6.34 | 6.29 | 11.27 | 7.39 | 7.51 | 6.34 |
| K₂O | 0.18 | 0.18 | 0.18 | 0.18 | 0.18 | 0.18 | 0.18 | 0.18 | 0.18 | 0.18 | 0.18 | 0.18 | 0.18 | 0.18 | 0.18 |
| TiO₂ | 0.00 | 0.00 | 0.00 | 0.00 | 0.01 | 0.01 | 0.01 | 0.01 | 0.01 | 0.01 | 0.01 | 0.00 | 0.00 | 0.00 | 0.01 |
| Fe₂O₃ | 0.00 | 0.00 | 0.00 | 0.00 | 0.01 | 0.01 | 0.01 | 0.01 | 0.01 | 0.01 | 0.01 | 0.00 | 0.00 | 0.00 | 0.01 |
| Total | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Tg (°C) | 494 | 496 | 498 | 499 | 523 | 527 | 531 | 500 | 502 | 504 | 505 | 496 | 529 | 538 | 540 |
| Td (°C) | 571 | 579 | 580 | 586 | 608 | 609 | 617 | 577 | 583 | 584 | 587 | 576 | 607 | 614 | 616 |
| CTE (10⁻⁷/°C)^{*} | 83 | 82 | 80 | 78 | 75 | 76 | 78 | 82 | 82 | 82 | 81 | 91 | 82 | 83 | 80 |
| ρ (g/cm³) | 2.432 | 2.428 | 2.425 | 2.422 | 2.448 | 2.462 | 2.474 | 2.440 | 2.441 | 2.443 | 2.445 | 2.447 | 2.481 | 2.496 | 2.486 |
| E (GPa) | 82.7 | 82.9 | 82.7 | 82.9 | 83.3 | 83.9 | 84.5 | 83.2 | 83.4 | 83.1 | 83.3 | 80.9 | 83.9 | 85.8 | 85.1 |
| E/ρ (10⁶ N•m/kg) | 34.0 | 34.1 | 34.1 | 34.2 | 34.0 | 34.1 | 34.2 | 34.1 | 34.2 | 34.0 | 34.1 | 33.1 | 33.8 | 34.4 | 34.2 |
| T4 (°C) | | | | | 1079 | 1071 | | 1032 | | 1036 | | 1054 | | | |
| TL (°C) | 1006 | 1012 | 1029 | 1050 | 1015 | 1018 | 1032 | 1003 | 984 | 995 | 1010 | 948 | 1021 | 1033 | 1032 |
| Al₂O₃/(Al₂O₃+SiO₂) | 0.119 | 0.119 | 0.118 | 0.118 | 0.108 | 0.119 | 0.131 | 0.120 | 0.120 | 0.120 | 0.120 | 0.120 | 0.135 | 0.150 | 0.142 |
| (R₂O + MgO + CaOy (R₂O + MgO + CaO + Al₂O₃) | 0.713 | 0.709 | 0.705 | 0.702 | 0.724 | 0.713 | 0.703 | 0.716 | 0.715 | 0.715 | 0.715 | 0.716 | 0.704 | 0.693 | 0.694 |
| R₂O)/(R₂O + MgO + CaO) | 0.829 | 0.825 | 0.822 | 0.819 | 0.668 | 0.654 | 0.640 | 0.788 | 0.779 | 0.770 | 0.761 | 0.831 | 0.643 | 0.627 | 0.627 |
| CaO/(CaO + MgO) | 0.592 | 0.592 | 0.592 | 0.592 | 0.750 | 0.750 | 0.750 | 0.655 | 0.665 | 0.674 | 0.683 | 0.592 | 0.750 | 0.750 | 0.750 |
| Na₂O/(Na₂O + Li₂O) | 0.362 | 0.348 | 0.333 | 0.318 | 0.365 | 0.384 | 0.403 | 0.357 | 0.358 | 0.360 | 0.361 | 0.588 | 0.480 | 0.480 | 0.421 |
| SiO₂-Al₂O₃ | 58.7 | 59.1 | 59.5 | 59.9 | 61.0 | 58.7 | 56.4 | 58.4 | 58.4 | 58.4 | 58.5 | 58.3 | 55.3 | 52.3 | 54.2 |

| | | | | | | | | | | | | | | | |
|---|---|---|---|---|---|---|---|---|---|---|---|---|---|---|---|
| Blanks indicate "not measured". Examples 32 to 35 are Comparative Examples. | | | | | | | | | | | | | | | |

## Claims

1. A glass composition comprising, as components, in mol%:
60 to 75% SiO₂;
5 to 15% Al₂O₃;
0.5 to 5% MgO;
0.5 to 10% CaO;
5 to 20% Li₂O;
2 to 10% Na₂O; and
0 to 5% K₂O, wherein
the glass composition has a density of 2.48 g/cm³ or less.

2. The glass composition according to claim 1, comprising, as components, in mol%:
64 to 71% SiO₂;
7.9 to 11.3% Al₂O₃;
1.1 to 2.8% MgO;
1.8 to 7.4% CaO;
7.0 to 14.3% Li₂O;
3.5 to 8.2% Na₂O; and
0 to 2% K₂O.

3. The glass composition according to claim 1 or 2, wherein when a content of a component X in mol% is expressed as [X], [SiO₂] - [Al₂O₃] is 54.0% or more.

4. The glass composition according to any one of claims 1 to 3, wherein when a content of a component X in mol% is expressed as [X], ([MgO] + [CaO]) is 2 to 10%.

5. The glass composition according to any one of claims 1 to 4, being substantially free of SrO and BaO.

6. The glass composition according to any one of claims 1 to 5, wherein when a content of a component X in mol% is expressed as [X], [R₂O] is 12 to 20%, where [R₂O] is the sum of [Li₂O], [Na₂O], and [K₂O].

7. The glass composition according to any one of claims 1 to 6, wherein when a content of a component X in mol% is expressed as [X], [Li₂O] > [Na₂O] is satisfied.

8. The glass composition according to any one of claims 1 to 7, wherein when a content of a component X in mol% is expressed as [X], ([Na₂O]/([Na₂O] + [Li₂O]) is 0.45 or less.

9. The glass composition according to any one of claims 1 to 8, wherein when a content of a component X in mol% is expressed as [X], [R₂O]/([R₂O] + [MgO] + [CaO]) is 0.61 to 0.84, where [R₂O] is the sum of [Li₂O], [Na₂O], and [K₂O].

10. The glass composition according to any one of claims 1 to 9, wherein when a content of a component X in mol% is expressed as [X], ([R₂O] + [MgO] + [CaO])/([R₂O] + [MgO] + [CaO] + [Al₂O₃]) is 0.68 to 0.73, where [R₂O] is the sum of [Li₂O], [Na₂O], and [K₂O].

11. The glass composition according to any one of claims 1 to 10, wherein
a Young's modulus is 80 GPa or more, and
a specific modulus is 33.5 × 10⁶ Nm/kg or more.

12. The glass composition according to claim 2, wherein when a content of a component X in mol% is expressed as [X],
[SiO₂] - [Al₂O₃] is 56.0% or more,
([R₂O] + [MgO] + [CaO])/([R₂O] + [MgO] + [CaO] + [Al₂O₃]) is 0.68 to 0.73,
([Na₂O]/([Na₂O] + [Li₂O]) is 0.2 to 0.49, and
a specific modulus is 33.5 × 10⁶ Nm/kg or more.

13. A glass sheet formed of the glass composition according to any one of claims 1 to 12.

14. The glass sheet according to claim 13 being float glass.

15. A substrate for an information recording medium, the substrate comprising the glass sheet according to claim 13 or 14.

16. A method for producing a glass sheet, comprising:
melting glass raw materials; and
shaping the molten glass raw materials into a glass sheet by a float process, wherein
the glass raw materials are prepared so that the glass sheet is formed of the glass composition according to any one of claims 1 to 12.
